# EUROPÄISCHE PATENTSCHRIFT

(11) **EP 2 089 201 B1**
(45) Veröffentlichungstag und Bekanntmachung des Hinweises auf die Patenterteilung: **12.09.2012**
(21) Anmeldenummer: 07786048.4
(22) Anmeldetag: 13.07.2007
(51) Int. Cl.: B29B 17/00, B29B 17/02, B03B 9/06

(54) **VERFAHREN ZUM ZERKLEINERN VON VERBUNDSTOFFMATERIALIEN**
PROCESS FOR THE COMMINUTION OF COMPOSITE MATERIALS
PROCÉDÉ DE RÉDUCTION DE MATÉRIAUX COMPOSITES

(30) Priorität: 27.07.2006 DE 102006034692
(43) Veröffentlichungstag der Anmeldung: 19.08.2009
(73) Patentinhaber: Adamec, Thomas, 90480 Nürnberg (DE)
(72) Erfinder: Adamec, Thomas, 90480 Nürnberg (DE)
(74) Vertreter: Förster, Susanne
(86) Internationale Anmeldenummer: PCT/EP2007/006220
(87) Internationale Veröffentlichungsnummer: WO 2008/011993

(56) Entgegenhaltungen:
- EP-A- 1 747 870
- WO-A-2005/065848
- DE-A1- 4 319 989
- DE-A1- 10 344 861
- DE-A1- 19 726 105
- DE-A1-102004 001 305
- DE-A1-102004 041 494
- US-B1- 6 452 126
- YOKOYAMA S ET AL: "RECYCLING OF THERMOSETTING PLASTIC WASTE FROM ELECTRONIC COMPONENT PRODUCTION PROCESSES" PROCEEDINGS OF THE INTERNATIONAL SYMPOSIUM ON ELECTRONICS AND THE ENVIRONMENT (ISEE). ORLANDO, MAY 1 - 3, 1995, NEW YORK, IEEE, US, 1. Mai 1995 (1995-05-01), Seiten 132-137, XP000526874 ISBN: 0-7803-2138-3

## Beschreibung

Die Erfindung betrifft ein Verfahren zum Zerkleinern von Verbundstoffmaterialien, z.B. von Elektronikschrott, sowie zur Trennung der darin enthaltenen Materialien mit einer Mehrzahl von Zerkleinerungs- und Trennungsstufen unter Einsatz mindestens einer Hammer- oder Rotorprallmühle.

Um aus Verbundstoffmaterialien, die als Abfall anfallen, recyclingfähiges Material zu gewinnen, muss es zunächst zerkleinert und dann in die unterschiedlichen wieder verwertbaren Materialien aufgetrennt werden. Bei derartigen Verbundstoffmaterialien handelt es sich z.B. um Elektronikschrott, der z.B. aus elektronischen Geräten, wie Telekommunikationsgeräten, Computern, Radios, Fernsehern oder deren Teilen besteht. Bei Elektronikschrott handelt es sich auch um zu entsorgende Leiterplatten, deren feine Metallteile sich nur dann zurückgewinnen lassen, wenn die Leiterplatten fein zermahlen werden.

Bisher war es üblich, derartigen Elektronikschrott in sogenannten Hammermühlen, Schneidmühlen oder Wirbelstrommühlen zu zerkleinern. Zur Fraktionierung der verschiedenen Materialien werden verschiedene Verfahren, wie z.B. Windsichten, Wirbelstromscheidung, Schwerkrafttrennung durch Setztische usw. durchgeführt. Dennoch verbleibt im Restprodukt ein zu hoher Anteil von nicht aussortierten Materialien.

Es wird jedoch vom Gesetzgeber eine bestimmte Verwertungsquote vorgeschrieben, die eingehalten werden muss. Die Verwertungsquote ist dabei von der Produktgruppe abhängig. Für Telekommunikationsgeräte gilt eine Verwertungsquote von 85 Gewichtsprozent, die dem Rohstoffrecycling zugeführt werden muss. Der Rest darf energetisch verwertet oder deponiert werden. Die Verwertungsquote kann bislang nur dadurch erreicht werden, indem zunächst eine manuelle Zerlegung des Elektronikschrotts erfolgt, bevor der zerlegte Elektronikschrott dem automatisierten Verfahren zugeführt wird, Ein solches manuelles Verfahren erweist sich jedoch als langsam und sehr teuer.

DE 197 26 105 A1 betrifft ein Verfahren und eine Anlage zur Aufbereitung von Elektronik-Schrott, bei welchem nach mehreren Zerkleinerungsstufen eine elektrostatische Trennung des pulverisierten Materials erfolgt. Dazu wird das pulverisierte Material mittels einer Korona-Elektrode elektrostatisch aufgeladen. Infolge der unterschiedlichen Entladung von Metall und Nichtmetall wird eine Trennung in eine reine Metallfraktion, eine reine Nichtmetallfraktion sowie in eine nicht ausreichend aufgeschlossene Mischfraktion erreicht.

Aus DE 43 19 989 A1 ist ein Verfahren und eine Vorrichtung zur Aufbereitung von Sekundärrohstoffen, insbesondere zur Aufbereitung von Elektronikschrott, bekannt, Dabei werden in einer Vormontage Kunststoffgehäuse von darin angeordneten Leiterplatten und den metallischen Befestigungselementen getrennt. Nach der Vormontage erfolgt eine Sortierung mittels Sensoren und Abwurfeinrichtungen, wobei Metallteile und/oder metallhaltige Kunststoffbestandteile aussortiert werden. Zur Sortierung der Kunststoffteile, die keine metallischen Bestandteile erhalten, ist ein Sensor zur Erkennung der Kunststoffart vorgesehen. Dabei kann es sich um eine spektroskopische Einrichtung handeln. Unter spektroskopischen Einrichtungen werden hier Analyseeinrichtungen verstanden, die z.B. nach dem Prinzip der Röntgenfluoreszenzanalyse, der Massenspektroskopie, der NIR-Messungen, der Neutronenaktivierungsanalyse oder der thermo-optischen Erkennung funktionieren.

Aus DE 103 44 861 A1 geht ein Verfahren zur Gewinnung von Wertstoffen und Separation schadstoffbelasteter Produkte aus verbundstoffhaltigen, vordemontierten und vorbehandelten Altmaterialien hervor, wobei zum Erkennen von Schadstoffen und Kunststoffen ein oder mehrere Detektionsgeräte eingesetzt werden, Als Detektionsgeräte können Spektrometer, Scanngeräte zum Erfassen von Strichcodes oder anderen Markierungen sowie Kameras mit oder ohne Bildbearbeitungseinheit verwendet werden.

In dem Artikel "Sortierung von Abfällen mit dem Mogensen Röntgensortierer AR 1200, Dipl.-Ing. Uwe Fleischner und Dipl.-Ing. Jens Bergmann, Wedel, AUFBEREITUNGS TECHNIK 45 (2004) Nr. 11 wird ein Sortierverfahren für die Erzeugung von Abfallfraktionen und seine Anwendbarkeit für Siedlungs- und Gewerbeabfälle vorgestellt. Es basiert auf der Anwendung von Röntgenstrahlen und den materialabhängigen, unterschiedlichen Absorptionskoeffizienten als Sortierkriterien, die es gestatten, vor allem eine Trennung in organische und organische Fraktionen zu erreichen. Dabei wird in einem Röntgensortiergerät die Röntgentransmission durch einen schnellen zeilenförmigen Sensor gemessen. Die Unterscheidung der Bestandteile des Abfalls und anderer Schüttgüter basiert auf den materialabhängigen, unterschiedlichen Absorptionskoeffizienten der Röntgenstrahlen. So lassen sich organische Teile von anorganischen unterscheiden. Die vom Röntgendetektor erhaltenen Daten werden von einem Hochleistungscomputer in Echtzeit ausgewertet und innerhalb von wenigen Millisekunden als Sortierentscheidung an externe, schnell arbeitende Druckluftventile weitergeleitet. Wenn das Material die Röntgenkabine durchlaufen hat, wird es am Bandkopf in einer flachen Parabel in den sich unmittelbar anschließenden Trennkasten gefordert. Nach dem Verlassen des Bandes werden die anorganischen Teile nach oben durch Druckluftstöße ausgelenkt, während die organischen Bestandteile vor der Trennkante in den Durchlaufschacht gelangen.

Der Erfindung liegt nun die Aufgabe zugrunde, ein Verfahren zum Zerkleinern von Verbundstoffmaterialien sowie zur Trennung der darin enthaltenen Materialien zu schaffen, mit welchem ein besserer Trenngrad der einzelnen Bestandteile bei geringem Zeitaufwand erreicht wird.

Erfindungsgemäß wird diese Aufgabe durch die gesamte Lehre des Patentanspruchs 1 gelöst. Vorteilhafte Weiterbildungen des Verfahrens ergeben sich aus den Unteransprüchen 2 -14.

Bei dem erfindungsgemäßen Verfahren sind eine Mehrzahl von Zerkleinerungsund Trennungsstufen unter Einsatz mindestens einer Hammer- oder Rotorprallmühle vorgesehen, wobei vor der Zerkleinerung des Materials in der Hammer- oder Rotorprallmühle eine Trennung von bereits zerkleinertem Verbundstoffmaterial in halogenhaltige Kunststoffe, Verbundstoffmaterial sowie Metalle einerseits und im Wesentlichen halogenfreie Kunststoffe andererseits mittels Röntgentransmissionsstrahlung und damit eine Trennung nach der Materialdichte erfolgt, wobei die im Wesentlichen halogenfreien Kunststoffe im Wesentlichen aussortiert werden. Damit können verwertbare bzw. recyclebare Kunststoffe schon vor der Zuführung zur Hammer- oder Rotorprallmühle ausgesondert werden. In dem somit der Hammer- oder Rotorprallmühle zugeführten Material ist nur noch ein geringer Kunststoffanteil bis zu einer bestimmten Teilchengröße (insbesondere < 3 mm) enthalten. Dadurch kann das verbleibende Metall-Verbundstoffmaterial-Gemisch in der Hammer- oder Rotorprallmühle leichter zerkleinert werden. Würden dagegen noch größere Kunststoffteile in diesem Gemisch vorhanden sein, würden sich diese nur verformen und kaum zerkleinert werden. Dagegen wirkt das zerkleinerbare Metallmaterial und Verbundstoffmaterial, in dem z.B. auch Glasfasern oder Kohlenstofffasern eingelagert sein können, wie Mahlgut, das wiederum eine weitere Zerkleinerung begünstigt. Insgesamt wird also eine bessere Auftrennung zwischen Kunststoffen einerseits und Verbundmaterial bzw. Metallen andererseits erreicht. Z.B. werden mittels des erfindungsgemäßen Verfahrens Kunststoffteile von Leiterplatten bereits vor Zuführung zur Hammer- oder Rotorprallmühle im Wesentlichen aussortiert und können der Wiederverwertung zugeführt werden. Die Verwertungsquote der Kunststoffe liegt bei nahe 98 - 99 %.

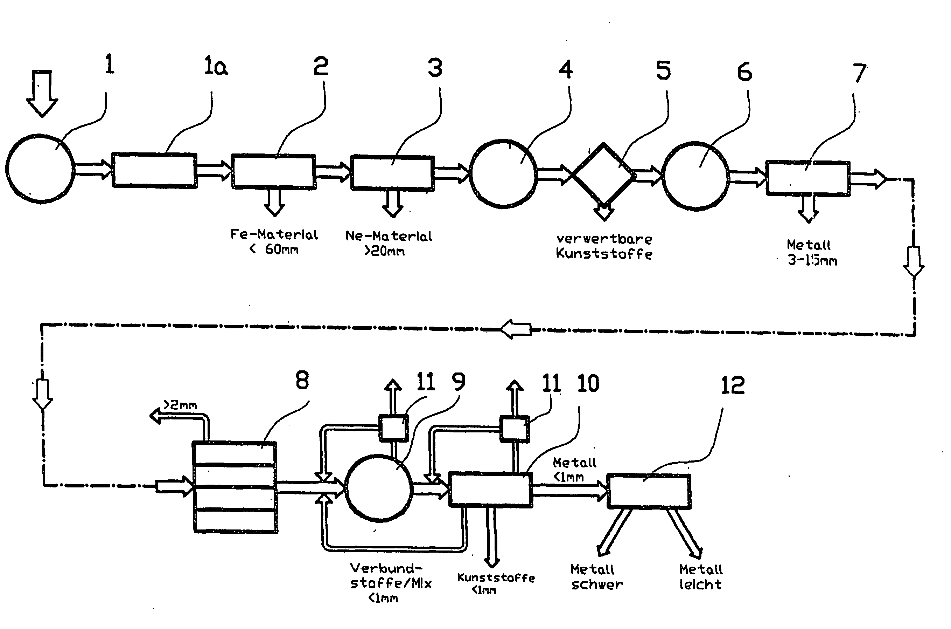

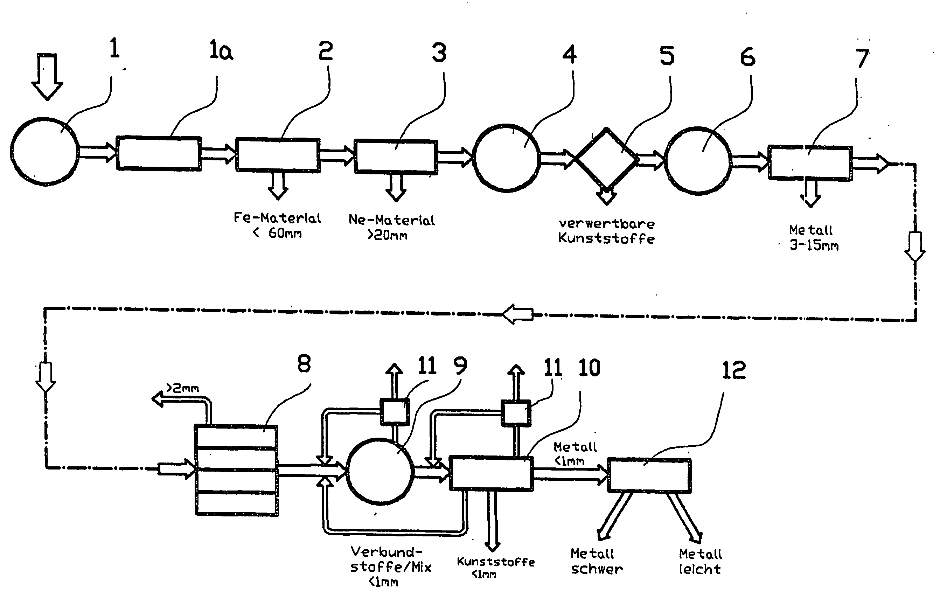

Die Trennung von bereits zerkleinertem Verbundstoffmaterial in Kunststoffe einerseits und Verbundstoffe bzw. Metalle erfolgt mittels Röntgentransmissionsstrahlung. Dazu kann insbesondere eine Vorrichtung eingesetzt werden, wie sie in der DE 10 2004 001 790 A1 sowie der WO 2005/065848 A1 offenbart ist. Dabei durchdringt Röntgenstrahlung das Sortiermaterial auf dem Förderband. Ein Röntgenzeilensensor erfasst die Transmissionsstrahlung als hoch aufgelöstes Röntgenbild. Je größer die Materialdichte des Sortiergutes ist, desto geringer ist die resultierende Helligkeit der Abbildung. Das Bildmaterial ermöglicht also die Sortierung nach der Dichte von Materialien. Die Trennung kann per Druckluft durch Auslenken von Partikeln nach oben erfolgen. Mittels dieses röntgenbasierten Sortiersystems werden insbesondere verwertbare Kunststoffe aussortiert. Mit besonderem Vorteil können chlorhaltige Kunststoffe (z.B. PVC), flammhemmende Kunststoffe (bromiert) und stark chlorhaltige Elastomere von den verwertbaren Kunststoffen abgetrennt werden. Ein erhöhter Chlorgehalt soll bei der thermischen Verwertung von Altkunststoffen vermieden werden, da durch die Verbrennung des Chlors Dioxine entstehen können. Aufgrund des Chlorgehalts, z.B. in PVC, erhöht sich die Dichte dieses Kunststoffes signifikant zu anderen, so dass dieses Material mittels des Röntgenverfahrens gut aussortierbar ist. Das Verfahren der Röntgentransmissionsstrahlung eignet sich für das erfindungsgemäße Verfahren besonders, da eine relativ schnelle Ausschleusung von Kunststoffteilchen (insbesondere ab 3 mm Größe) möglich ist. Mit einer Bandgeschwindigkeit von ca. 3 m/s wird eine sehr hohe und effektive Materialausschleusung erreicht, Das gesamte Verfahren kann somit sehr schnell und kosteneffektiv durchgeführt werden.

Bei der Trennung mittels Röntgentransmissionsstrahlung werden zwei Röntgenstrahlungsenergieniveaus und deren Differenzbildung verwendet. Wie aus den oben genannten Patentschriften hervorgeht und wie auch aus dem Stand der Technik bereits bekannt ist, können durch die Beobachtung eines hoch auflösenden Bildes unter Betrachtung zweier Röntgenstrahlungsenergieniveaus und die rechnerische Auswertung eines sich ergebenden Differenzbildes Informationen über die Inhaltsstoffe einzelner Schüttgutpartikel gewonnen werden.

Zusätzlich zur Trennung mittels Röntgentransmissionsstrahlung kann vorteilhafterweise eine Trennung von unterschiedlichen Materialien, insbesondere von unterschiedlichen Metallen, mittels elektromagnetischer Induktion erfolgen, Dadurch werden bereits vor der weiteren Zerkleinerung unterschiedliche Metalle voneinander getrennt, so dass am Ende ein höherer Sortiergrad erreicht wird.

Zusätzlich zur oben beschriebenen Röntgentechnik sowie alternativ oder zusätzlich zur Induktionstechnik kann zweckmäßigerweise eine optische Trennung von optisch unterschiedlichen Materialien erfolgen. Beispielsweise können so metallisch glänzende Materialien von farbigen und/oder beschichteten Materialien getrennt werden, Es können also unterschiedliche Eigenschaften des Materials wie Korngröße, Form und Farbe zur Sortierung genutzt werden.

Die optische Trennung erfolgt vorteilhafterweise mittels Kameratechnik. Es können eine oder mehrere Kameras eingesetzt werden, vor deren Linse die zerkleinerten Materialien vorbeilaufen.

Insgesamt ergibt sich mittels der oben beschriebenen Röntgentechnik, Induktionstechnik und Kameratechnik ein sehr hoher Sortiergrad. Die Reihenfolge der unterschiedlichen Techniken kann variieren. Es kann auch vorgesehen sein, dass diese Trennungsstufen im Inselbetrieb genutzt werden.

Wie oben bereits erwähnt, wird das mittels Röntgentransmissionsstrahlung aussortierte Verbundmaterial und Metallmaterial der Hammer- oder Rotorprallmühle zugeführt. Bevor es der Hammer- oder Rotorprallmühle zugeführt wird, kann das Material zwischengelagert werden, wobei eine getrennte Lagerung von verschiedenen Produktsorten (z.B. Telekommunikationsgeräten, Haushaltsgeräten usw.) erfolgen kann. Mittels einer solchen Auftrennung nach Produktsorten kann ggf. auch eine bessere Auftrennung der einzelnen Materialien erreicht werden.

Vorteilhafterweise kann das in der Hammer- oder Rotorprallmühle zerkleinerte Material zunächst über einen sogenannten Stangensizer laufen. Auf diesem vibrierenden Stangensizer wird Kabelgewöll bzw. langes, wolliges Material abgeschieden, wobei das kleinere kompakte Material zwischen den Stangen durchfällt.

In einem weiteren Schritt kann das zerkleinerte kompakte Material einem Schwergutausleser, insbesondere einem Windsichter, zugeführt werden, der dieses in Metalle einerseits und Kunststoffe bzw. Verbundstoffe andererseits auftrennt. Eine optimale Trennung der Materialien ist u.a. aufgrund deren Zerkleinerung in der Hammer- oder Rotorprallmühle möglich. Auch der relativ geringe Kunststoffanteil bei einer Korngröße von < 3 mm erlaubt eine gute Auftrennung.

Mit besonderem Vorteil kann das zerkleinerte Material mindestens nach einer Zerkleinerungs- und/oder Trennungsstufe durch Saugförderung weitergeleitet werden. Das zerkleinerte Material wird dabei im Unterdruckverfahren an die nächste Zerkleinerungs- oder Trennungsstufe weitergeleitet, wobei die Saug- bzw. Abluft über mindestens einen Filter oder eine Filteranlage geführt werden kann. Mittels der Saugförderung ist ein schneller Weitertransport der Materialien von einer zur nächsten Verarbeitungsstufe möglich.

Wie bereits erwähnt, kann vorteilhafterweise die zur Saugförderung eingesetzte Saugluft über mindestens einen Filter geführt werden. Nach dem Filter tritt die entsprechend gereinigte Saugluft nach außen ins Freie aus. Die Saugluft kann aber auch wieder in das System zurückgeführt werden, insbesondere wenn noch Staubpartikel darin enthalten sind. Die nach außen tretende gereinigte Abluft stellt somit keine Umweltbelastung mehr dar.

Das im Filter verbleibende Filtrat kann zweckmäßigerweise in den Zerkleinerungs- bzw. Trennungsprozess zurückgeführt werden, so dass schließlich das gesamte Material aufgeschlossen wird. Ein hoher Verwertungsgrad wird damit erreicht.

Die Filter können vorteilhafterweise selbstreinigend ausgebildet sein. Das bedeutet, dass die Filter z.B. ab einem bestimmten Zeitpunkt, einer bestimmten Einlagerung des Filtrats oder einem bestimmten Druckverlust am Filter, diese das Filtrat abgeben, damit dieses wieder in das Verfahren zurückgeführt wird. Die Filter bzw. die Filteranlage kann dabei computertechnisch bzw. über einen Prozessor überwacht und gesteuert werden.

Das Filtrat kann über eine Schleuse in den Prozess zurückgeführt werden, um mit möglichst geringen Druckverlusten das Schüttgut abziehen zu können. Insbesondere kann hier eine Zellenradschleuse vorgesehen sein.

Das aus dem Schwergutausleser aussortierte Verbundstoff- und Kunststoffmaterial kann einer Mehrdecksiebanlage zugeführt werden, welche das Material nach Korngrößen sortiert und entweder wieder der Hammer- oder Rotorprallmühle (z.B. bei einer Korngröße > 2 mm) oder der Wirbelstrommühle (z.B. bei einer Korngröße < 2 mm) zur weiteren Verbundstofftrennung zuführt. Vor der Weiterleitung an die entsprechende Zerkleinerungsmühle kann das Material jeweils über einen Filter bzw. eine Filteranlage laufen.

In einem Coronawalzenscheider kann eine Aussortierung von Metall, Kunststoff und Metall-Kunststoff-Material (Verbundmaterial) erfolgen. Zweckmäßigerweise wird dem Coronawalzenscheider die Materialmischung von einer Korngröße < 1 mm zugeführt, welches von der Wirbelstrommühle kommt.

Schließlich kann das in dem Coronawalzenscheider aussortierte Metall in einem Schwergutauslöser, insbesondere einem Windsichter, nach leichten und schweren Materialien aussortiert werden.

Eine zweckmäßige Ausgestaltung des erfindungsgemäßen Verfahrens wird anhand der Zeichnungsfigur näher erläutert. Diese zeigt ein vereinfachtes Schema des erfindungsgemäßen Verfahrens.

Nach Aufgabe von Verbundstoffmaterialien, z.B. von Elektronikschrott, aus dem ggf. vorher schadstoffhaltige Teile manuell aussortiert wurden, wird dieser zur mechanischen Zerkleinerung einer Hammermühle 1 zugeführt. Dort werden die Materialien auf < 60 mm zerkleinert.

An einem Stangensizer la wird Kabelgewöll und anderes langes, wolliges Material aussortiert. Das feine Material fällt zwischen den Stangen durch und wird anschließend in einer Elektromagnettrommel 2 nach Eisen-Material sortiert.

Das Nicht-Eisen-Material wird im sich daran anschließenden Wirbelstromscheider 3 aussortiert.

Das verbleibende Material, das von feinem FE-Material und NE-Material noch nicht befreit ist, wird einem Granulator 4 zugeführt. Er schneidet das Material auf < 30 mm und verhindert Gewöllebildung, z.B. von verbleibenden Kupferdrähten.

Das im Granulator 4 zerkleinerte Material gelangt in eine Kunststofftrennanlage 5, in welcher das bereits zerkleinerte Verbundstoffmaterial in Kunststoffe einerseits und Verbundstoffe sowie Metalle andererseits mittels Röntgentransmissionsstrahlung aussortiert wird. Eine derartige Kunststofftrennanlage geht aus der DE 10 2004 001 790 A1 sowie WO 2005/065848 A1 hervor. Es wird eine metallfrei gemischte Kunststofffraktion aussortiert, die in einem werkstofflichen Recycling verwertet werden kann. In dem verbleibenden Volumenstrom sind insbesondere halogenhaltige Kunststoffe (z.B. flammgeschützte Kunststoffe) und Metalle enthalten, die weiter aufbereitet werden. Der Stoffstrom-Output an verwertbaren Kunststoffen kann dabei ca. 20 % - 40 % je nach Einsatzmaterial betragen.

Bei der Trennung mittels Röntgentransmissionsstrahlung werden zwei Röntgenstrahlungsenergieniveaus und deren Differenzbildung verwendet.

Außerdem erfolgt in der Kunststoffttrennanlage 5 sowohl eine Trennung von unterschiedlichen Metallen mit elektromagnetischer Induktion als auch eine optische Trennung von optisch unterschiedlichen Materialien mittels Kameratechnik. Das an der Kamera vorbei geführte Material unterscheidet dabei die Materialteilchen, z.B. die aussortierten Kunststoffteilchen, nach Größe, evtl. Form und Farbe. Auch eine Trennung von Holz- oder Keramikteilchen ist damit möglich.

Das mittels Röntgentransmissionsstrahlung aussortierte Verbundmaterial und Metall wird der Rotorprallmühle 6 zugeführt und dort nachzerkleinert. Indem bereits vorher in der Kunststofftrennanlage 5 ein wesentlicher Anteil der Kunststoffe aussortiert wurde, ist der Zerkleinerungsprozess in der Rotorprallmühle 6 wesentlich effektiver, da hier nur noch ein geringer Kunststoffanteil mit einer Korngröße < 3 mm vorhanden ist. Diese kleineren Kunststoffanteile können leichter zerkleinert werden. Sie beinhalten außerdem verhältnismäßig mehr Metallanteil und mehr Glasfaseranteil, welches wie Mahlgut wirkt. Große Kunststoffteilchen würden dagegen nur verformt werden.

Das in der Rotorprallmühle 6 zerkleinerte Material wird einem Windsichter 7 zugeführt, der dieses in Metalle einerseits und Kunststoffe bzw. Verbundstoffe andererseits auftrennt. Metallteilchen in der Größe von ca. 3 mm -15 mm werden aussortiert, wobei das verbleibende Material weiter im Prozess bleibt und einer Mehrdecksiebanlage 8 zugeführt wird. Material mit einer Korngröße von > 2 mm wird wieder zurück in die Rotorprallmühle 6 geleitet, während Material > als 1,25 mm der Wirbelstrommühle 9 zur weiteren Zerkleinerung zugeführt wird. Das dort zerkleinerte Material wird zusammen mit dem aus dem Mehrdecksieb aussortierten Material mit einer Korngröße < 1,25 mm einem Coronawalzenscheider 10 zugeführt. Dort folgt eine Aussortierung nach Metallen, Kunststoffen und Metall-Kunststoff Materialien. In einem Windsichter 12 wird das Metall schließlich nach leichten und schweren Metallen voneinander getrennt.

Das zerkleinerte Material wird mindestens nach einer Zerkleinerungs- und/oder Trennungsstufe (z.B. vor der Zuführung zur Rotorprallmühle 6) durch Saugförderung weitergeleitet. Die pneumatische Förderung erweist sich als äußerst effektiv und schnell. Die zur Saugförderung eingesetzte Saugluft wird über mindestens einen Filter 11 geführt. Die in der Saugluft anfallenden Staubpartikel werden somit herausgefiltert und die entstehende, saubere Abluft wird der Außenluft zugeführt. Das im Filter 11 verbleibende Filtrat wird in den Zerkleinerungs- bzw. Trennungsprozess zurückgeführt, so dass sämtliches Material aufgeschlossen wird. In dem schematisch dargestellten Verfahrensablauf ist diese Rückführung des Filtrats in den Prozess nur bei der Wirbelstrommühle 9 sowie dem Coronawalzenscheider 10 dargestellt. Sie kann aber auch zusätzlich oder alternativ bei bzw. nach anderen Zerkleinerungs- oder Trennungsstufen vorgesehen sein.

Die Filter 11 reinigen sich automatisch, indem z.B. die Menge des darin angesammelten Substrats oder der Druckverlust am Filter 11 gemessen wird und ab einem bestimmten Wert das Filtrat gelöst wird. Das Filtrat wird über eine Zellenradschleuse in den Prozess zurückgeführt.

### BEZUGSZEICHENLISTE

- 1): Hammermühle
- 1a): Stangensizer
- 2): Elektromagnettrommel
- 3): Wirbelstromscheider
- 4): Granulator
- 5): Kunststofftrennanlage
- 6): Rotorprallmühle
- 7): Windsichter
- 8): Mehrdecksiebanlage
- 9): Wirbelstrommühle
- 10): Coronawalzenscheider
- 11): Filter
- 12): Windsichter

## Patentansprüche

1. Verfahren zum Zerkleinern von Verbundstoffmaterialien, z.B. von Elektronikschrott, sowie zur Trennung der darin enthaltenen Materialien mit einer Mehrzahl von Zerkleinerungs- und Trennungsstufen unter Einsatz mindestens einer Hammer- oder Rotorprallmühle (6),
**dadurch gekennzeichnet, dass**
vor der Zerkleinerung des Materials in der Hammer- oder Rotorprallmühle (6) eine Trennung von bereits auf Mahlgutgröße zerkleinertem Verbundstoffmaterial in halogenhaltige Kunststoffe, Verbundstoffmaterial sowie Metalle einerseits und halogenfreien Kunststoffe andererseits mittels Röntgentransmissionsstrahlung und damit eine Trennung nach der Materialdichte erfolgt, wobei bei der Trennung mittels Röntgentransmissionsstrahlung zwei Röntgenstrahlungsenergieniveaus und deren Differenzbildung verwendet werden und die halogenfreien Kunststoffe aussortiert werden.

2. Verfahren nach einem der vorhergehenden Ansprüche,
**dadurch gekennzeichnet, dass**
eine Trennung von unterschiedlichen Materialien, insbesondere von unterschiedlichen Metallen, mittels elektromagnetischer Induktion erfolgt.

3. Verfahren nach einem der vorhergehenden Ansprüche,
**dadurch gekennzeichnet, dass**
eine optische Trennung von optisch unterschiedlichen Materialien erfolgt.

4. Verfahren nach Anspruch 3,
**dadurch gekennzeichnet, dass**
die optische Trennung mittels Kameratechnik erfolgt.

5. Verfahren nach einem der vorhergehenden Ansprüche,
**dadurch gekennzeichnet, dass**
das mittels Röntgentransmissionsstrahlung und/oder elektromagnetischer Induktion und/oder Kameratechnik aussortierte Verbundstoffmaterial und Metall der Rotorprallmühle (6) zugeführt wird.

6. Verfahren nach einem der vorhergehenden Ansprüche,
**dadurch gekennzeichnet, dass**
das in der Hammer- oder Rotorprallmühle (6) zerkleinerte Material einem Schwergutausleser, insbesondere einem Windsichter (7), zugeführt wird, der dieses in Metalle einerseits und Kunststoffe bzw. Verbundstoffe andererseits auftrennt.

7. Verfahren nach einem der vorhergehenden Ansprüche,
**dadurch gekennzeichnet, dass**
das zerkleinerte Material mindestens nach einer Zerkleinerungs- und/oder Trennungsstufe durch Saugförderung weitergeleitet wird.

8. Verfahren nach Anspruch 7,
**dadurch gekennzeichnet, dass**
die zur Saugförderung eingesetzte Saugluft über mindestens einen Filter (11) geführt wird.

9. Verfahren nach Anspruch 8,
**dadurch gekennzeichnet, dass**
das im Filter (11) verbleibende Filtrat in den Zerkleinerungs- bzw. Trennungsprozess zurückgeführt wird.

10. Verfahren nach einem der Ansprüche 8 oder 9,
**dadurch gekennzeichnet, dass**
das Filtrat über eine Schleuse in den Prozess zurückgeführt wird.

11. Verfahren nach einem der Ansprüche, 6 bis 10
**dadurch gekennzeichnet, dass**
das aus dem Schwergutausleser aussortierte Verbundstoff- und Kunststoffmaterial einer Mehrdecksiebanlage (8) zugeführt wird.

12. Verfahren nach Anspruch 11,
**dadurch gekennzeichnet, dass**
das in der Mehrdecksiebanlage (8) aussortierte Material eines bestimmten Komgrößenbereichs einer Wirbelstrommühle (9) zugeführt wird.

13. Verfahren nach einem der vorhergehenden Ansprüche,
**dadurch gekennzeichnet, dass**
in einem Coronawalzenscheider (10) eine Aussortierung von Metall-, Kunststoff- und Metall-Kunststoff-Material erfolgt.

14. Verfahren nach Anspruch 13,
**dadurch gekennzeichnet, dass**
das aussortierte Metall in einem Schwergutausleser, insbesondere einem Windsichter (12), nach leichten und schweren Metallen aussortiert wird.

## Claims

1. Process for the comminution of composite materials, for example electronics scrap, and for the separation of the materials contained therein, comprising a plurality of comminution and separation stages using at least one hammer mill or rotor-impact mill (6),
**characterized in that**,
before the comminution of the material in the hammer mill or rotor-impact mill (6), a separation of composite material already comminuted to ground-material size into halogen-containing plastics, composite material and metals on the one hand and halogen-free plastics on the other hand is performed by means of x-ray transmission radiation, and this is consequently a separation on the basis of material density, the separation by means of x-ray transmission radiation using two x-ray transmission energy levels and differentiation thereof and segregating the halogen-free plastics.

2. Process according to Claim 1,
**characterized in that**
a separation of differing materials, in particular of differing metals, is performed by means of electromagnetic induction.

3. Process according to one of the preceding claims,
**characterized in that**
an optical separation of optically differing materials is performed.

4. Process according to Claim 3,
**characterized in that**
the optical separation is performed by means of camera technology.

5. Process according to one of the preceding claims,
**characterized in that**
the composite material and metal segregated by means of x-ray transmission radiation and/or electromagnetic induction and/or camera technology is fed to the rotor-impact mill (6).

6. Process according to one of the preceding claims,
**characterized in that**
the material comminuted in the hammer mill or rotor-impact mill (6) is fed to a heavy material sorter, in particular an air classifier (7), which separates this material into metals on the one hand and plastics or composite materials on the other hand.

7. Process according to one of the preceding claims,
**characterized in that**,
at least after a comminuting and/or separating stage, the comminuted material is passed on by suction conveyance.

8. Process according to Claim 7,
**characterized in that**
the suction air used for the suction conveyance is passed through at least one filter (11).

9. Process according to Claim 8,
**characterized in that**
the filtrate remaining in the filter (11) is returned into the comminution or separation process.

10. Process according to either of Claims 8 and 9,
**characterized in that**
the filtrate is returned to the process via an airlock.

11. Process according to one of Claims 6 to 10,
**characterized in that**
the composite material and plastic material segregated from the heavy material sorter is fed to a multideck screening unit (8).

12. Process according to Claim 11,
**characterized in that**
the material of a specific grain size range that is segregated in the multideck screening unit (8) is fed to a cyclone mill (9).

13. Process according to one of the preceding claims,
**characterized in that**
a segregation of metal, plastic and metal-plastic material is performed in a corona roller separator (10).

14. Process according to Claim 13,
**characterized in that**
the segregated metal is segregated into light and heavy metals in a heavy material sorter, in particular an air classifier (12).

## Revendications

1. Procédé de déchiquetage de matériaux composites, par exemple de déchets électroniques, et de séparation des matériaux contenus, le procédé présentant plusieurs étapes de déchiquetage et de séparation et recourant à au moins un broyeur (6) à marteaux ou rotatif,
**caractérisé en ce que**
avant le déchiquetage du matériau dans le broyeur (6) à marteaux ou rotatif, on effectue une séparation des matériaux composites déjà déchiquetés à la taille d'un produit broyé en matières synthétiques halogénées, en matériaux composites ainsi qu'en métaux, d'une part, et en matières synthétiques non halogénées, d'autre part, au moyen d'une transmission de rayons X, pour ainsi réaliser une séparation des matériaux en fonction de leur densité, deux niveaux d'énergie des rayons X et leur différence étant utilisés dans la séparation par transmission de rayons X, les matières synthétiques non halogénées étant séparées.

2. Procédé selon la revendication 1, **caractérisé en ce qu'**une séparation de différents matériaux et en particulier de métaux différents s'effectue par induction électromagnétique.

3. Procédé selon l'une des revendications précédentes, **caractérisé en ce qu'**une séparation optique de matériaux réagissant optiquement de manière différente a lieu.

4. Procédé selon la revendication 3, **caractérisé en ce que** la séparation optique s'effectue au moyen d'une technique à caméra.

5. Procédé selon l'une des revendications précédentes, **caractérisé en ce que** le matériau composite et le métal triés par transmission de rayons X, induction électromagnétique ou technique à caméra sont apportés au broyeur (6) rotatif.

6. Procédé selon l'une des revendications précédentes, **caractérisé en ce que** le matériau déchiqueté dans le broyeur (6) à marteaux ou rotatif est apporté à un séparateur de produits lourds, en particulier un séparateur (7) à air, qui le sépare d'une part en métaux et d'autre part en matières synthétiques ou en matières composites.

7. Procédé selon l'une des revendications précédentes, **caractérisé en ce que** le matériau déchiqueté est transporté par aspiration au moins après l'étape de déchiquetage et/ou l'étape de séparation.

8. Procédé selon la revendication 7, **caractérisé en ce que** l'air d'aspiration utilisé pour le transport par aspiration est passé à travers au moins un filtre (11).

9. Procédé selon la revendication 8, **caractérisé en ce que** le filtrat qui reste dans le filtre (11) est renvoyé dans l'opération de déchiquetage ou l'opération de séparation.

10. Procédé selon l'une des revendications 8 ou 9, **caractérisé en ce que** le filtrat est renvoyé dans le procédé par l'intermédiaire d'un sas.

11. Procédé selon l'une des revendications 6 à 10, **caractérisé en ce que** le matériau composite et le matériau synthétique séparés par le séparateur de produits lourds sont apportés à une installation (8) de tamisage à plusieurs niveaux.

12. Procédé selon la revendication 11, **caractérisé en ce que** le matériau d'une plage granulométrique définie, trié dans l'installation (8) de tamisage à plusieurs niveaux, est apporté à un broyeur (9) à tourbillonnage.

13. Procédé selon l'une des revendications précédentes, **caractérisé en ce qu'**un tri des matériaux métalliques, des matériaux synthétiques et des matériaux métalliques et synthétiques s'effectue dans un séparateur Corona (10) à cylindres.

14. Procédé selon la revendication 13, **caractérisé en ce que** le matériau trié est trié en métaux légers et en métaux lourds dans un séparateur de produits lourds, en particulier un séparateur à air (12).
